# EUROPÄISCHE PATENTSCHRIFT

(11) **EP 3 921 562 B1**
(45) Veröffentlichungstag und Bekanntmachung des Hinweises auf die Patenterteilung: **03.05.2023**
(21) Anmeldenummer: 20704431.4
(22) Anmeldetag: 30.01.2020
(51) Int. Cl.: F16H 63/34

(54) **SYSTEM ZUM BETÄTIGEN EINER PARKSPERRE**
SYSTEM FOR ACTIVATING A PARK LOCK
SYSTÈME D'ACTIONNEMENT D'UN FREIN DE STATIONNEMENT

(30) Priorität: 08.02.2019 DE 102019201664
(43) Veröffentlichungstag der Anmeldung: 15.12.2021
(73) Patentinhaber: Magna PT B.V. & Co. KG, 74199 Untergruppenbach (DE)
(72) Erfinder: AMATO, Marco, 71069 Sindelfingen (DE); SEHIC, Stevens, 71732 Tamm (DE); RÜHLE, Günter, 74369 Löchgau (DE); RUPP, Steffen, 71711 Steinheim (DE)
(74) Vertreter: Rausch, Gabriele
(86) Internationale Anmeldenummer: PCT/EP2020/052270
(87) Internationale Veröffentlichungsnummer: WO 2020/160994

(56) Entgegenhaltungen:
- JP-A- 2014 185 651
- US-A1- 2014 323 269

## Beschreibung

Die vorliegende Erfindung betrifft ein System zum Betätigen einer Parksperre.

### Stand der Technik

Moderne Antriebsstränge für Kraftfahrzeuge verwenden Komponenten, die zum einen hydraulisch mittels eines Hydraulikaktuators zu betätigen sind und die zum anderen mittels eines Kühlfluides, insbesondere eines Hydraulikfluides, zu kühlen sind. Ein Beispiel einer derartigen Komponente ist eine nass laufende Lamellenkupplung. Derartige nass laufende Lamellenkupplungen werden beispielsweise als Anfahr- und Trennkupplungen in Doppelkupplungsgetrieben verbaut. Hydraulisch betätigte Lamellenkupplungen ermöglichen ein feinfühliges Einstellen des übertragenen Drehmomentes, sodass eine Lastübergabe von einem Teilgetriebe auf das andere Teilgetriebe eines Doppelkupplungsgetriebes komfortabel realisierbar ist. Die Kühlfunktion ermöglicht dabei, die nass laufende Lamellenkupplung auch im Schlupfbetrieb für längere Zeiträume zu betreiben, beispielsweise beim Anfahren an einem Berg, da die Kühlung die im Schlupf entstehende Reibungswärme effizient abführen kann.

Hydraulikanordnungen der eingangs genannten Art beinhalten häufig eine Fluidversorgungseinrichtung, bei der mittels einer Arbeits- bzw. Leitungsdruckventilanordnung aus einem Pumpendruck ein im Wesentlichen konstanter Leitungsdruck erzeugt wird. Die Pumpe kann daher nach der Art eines Nebenantriebes von einem Verbrennungsmotor angetrieben sein. In derartigen Fällen ist eine proportionale Steuerventilanordnung zum Ansteuern eines Hydraulikaktuators häufig an diesen Leitungsdruck angeschlossen, um hieraus einen von einer übergeordneten Steuereinrichtung vorgegebenen Steuerdruck für den Hydraulikaktuator zu erzeugen. Die Steuerventilanordnung ist dabei in der Regel direkt oder indirekt elektrisch angesteuert, beispielsweise über einen Elektromagneten.

Alternativ ist es auch bekannt, einen Steuerdruck für einen Hydraulikaktuator direkt am Druckanschluss einer Pumpe bereitzustellen, die in diesem Fall elektromotorisch angesteuert wird, sodass der Steuerdruck über die Drehzahl der Pumpe geregelt werden kann.

Die Verwendung von elektrischen Pumpen für unterschiedliche Aufgaben im Hydrauliksystem ist dabei aus der DE 10 2014 114 770 A1 bekannt. Die elektrischen Pumpen sind für Aktuatoren vorgesehen, sowie zur Kühlung und Schmierung der Komponenten im Getriebesystem. Dabei wird für den Betrieb einer Vakuumpumpe sowie einer Betätigungspumpe ein gemeinsamer elektrischer Antrieb verwendet, der über jeweils einen Freilauf an den Pumpen angreift.

Die oben beschriebenen Hydraulikanordnungen verwenden eine große Vielzahl an Ventilen und elektrischen Antrieben, was die Kosten und den Montageaufwand erhöht. Dies gilt insbesondere für den Fall, dass der Antriebsstrang ein Doppelkupplungsgetriebe aufweist, bei dem zwei zu betreibende Komponenten wie Lamellenkupplungen axial hintereinander oder parallel angeordnet sind. Denn in diesem Fall werden die Lamellenkupplungen in der Regel mittels jeweils eigener Kühlfluidventilanordnungen mit Kühlfluid versorgt.

Eine optimierte Ausführungsform einer Hydraulikanordnung ist aus der EP 3 196 496 B1 bekannt. Die Hydraulikanordnung für einen Kraftfahrzeugantriebsstrang weist eine mit Kühlfluid zu versorgende und mittels eines Hydraulikaktuators zu betätigende Komponente auf, insbesondere eine nass laufende Lamellenkupplungsanordnung, mit einer Fluidversorgungseinrichtung und einer Steuerventilanordnung, die an die Fluidversorgungseinrichtung angeschlossen ist. Diese Fluidversorgungseinrichtung ist dazu ansteuerbar, den Hydraulikaktuator mit einem Steuerdruck) zu versorgen, um die Komponente zu betätigen.

Weiterhin ist eine Kühlfluidventilanordnung vorhanden, die an die Fluidversorgungseinrichtung angeschlossen ist und dazu ansteuerbar ist, um die Komponente bei Bedarf an einem Kühlanschluss mit Kühlfluid zu versorgen.

Automatisierte Antriebsstränge für Kraftfahrzeuge weisen typischerweise eine Parksperrenanordnung auf, die bspw. ein mit einer Getriebeausgangswelle verbundenes Parksperrenrad beinhalten kann, in dessen Verzahnung eine mit dem Gehäuse verbundene Sperrklinke eingreifen kann, um eine Parksperrenstellung einzurichten. Bei klassischen Wandlerautomatikgetrieben können derartige Parksperrenanordnungen manuell betätigt werden, bspw. über den Wählhebel und einen hiermit verbundenen Seilzug oder ein Gestänge. Ferner ist es bei Automatikgetrieben auch bekannt, die Parksperrenanordnung mittels eines Parksperrenaktuators zu betätigen. Eine Betätigung einer Parksperrenanordnung durch einen Parksperrenaktuator wird auch als "park by wire" bezeichnet

Parksperre dieser Art sind beispielsweise aus der EP 3 067 591 B1 bekannt. Diese Parksperrenanordnung weist einen Arretieraktuator auf, der über eine Hebelanordnung mit einem Betätigungsglied gekoppelt ist. Die Aktuierung erfolgt dabei mit einem elektrischen Versteller.

Die DE 10 2016 210 757 B3 zeigt eine Parkbremse mit einer Aktuierung über einen Elektromotor. Dabei wird ein exzentrisches Bauteil in einer Drehrichtung gedreht. Ein Freilauf kann zusätzlich vorgesehen sein.

DE 10 2016 109 553 A1 zeigt eine Parksperre, die über einen elektrischen Motor, der an einer Pumpe angreift, betrieben wird. Dazu wird eine mechanische Kupplung von einer Steuerung angesprochen, die die Pumpe mit dem Antrieb für die Parksperre verbindet.

DE 10 2012 010 172 A2 zeigt eine hydraulisch angesteuerte Parksperre, die über eine variable Drehzahl der elektrischen Pumpe aktuiert wird.

US 2014 323 269 A1 zeigt ein System zur Betätigung einer Parksperre, die von einem Starter-Motor aktuiert wird, wobei der Starter-Motor auch eine Ölpumpe antreibt.

JP 2014 185 651 A zeigt einen elektrischen Aktuator. Die Motorantriebswelle ist mit einer Pumpe P in einem elektrischen Pumpenmechanismus verbunden, der Öl in Bezug auf eine Bremse durch einen Einweg-Zufuhrströmungskanal und einen Einweg-Einlassströmungskanal und Sperrmittel in einer Parkposition zirkulieren lässt. Die Motorantriebskraft wird jeweils auf die Pumpe und das Sperrmittel übertragen. Ein Antriebskraftumschaltmechanismus ist verbaut, um die Übertragung der Motorantriebskraft zu verbinden oder zu trennen.

Es ist vor diesem Hintergrund eine Aufgabe der Erfindung, eine verbesserte Anordnung mit Parksperre für einen Kraftfahrzeugantriebsstrang anzugeben.

### Beschreibung der Erfindung

Die Aufgabe wird erfüllt mit einem System zur Betätigung einer Parksperre in einem Getriebe nach Anspruch 1.

Durch die Bündelung zweier Aufgaben an einem elektrischen Antrieb wird dieser effizienter benutzt und ein weiterer elektrischer Motor für die Aktuierung einer Parksperre eingespart.

Es wird zur Umsetzung eine Pumpe für einen Volumenstrom zu Kühlung und Schmierung oder eine Pumpe zur Herstellung eines Drucks zur Betätigung von mindestens einer Kupplung und/oder einer Bremse im Getriebe verwendet. Durch Verwendung eines beliebigen bereits vorhandenen elektrischen Antriebs für eine Pumpe oder ein Aktuatorik im Getriebe zur Betätigung einer Parksperre erhält der Fachmann einen großen Freiheitsgrad, um die Parksperren-Lösung zu integrieren.

Vorteilhafte Ausgestaltungen der vorliegenden Erfindung sind in den abhängigen Ansprüchen dargelegt.

In einer vorteilhaften Ausgestaltung erfolgt das Einlegen und Auslegen der Parksperre über eine lineare Bewegung einer Arretierung.

Dabei ist die bauliche Ausgestaltung der Arretierung für die Erfindung nicht von Bedeutung. Hier können noch weitere Lenker und Umsetzungen vorgesehen sein. In der oben genannten, vorteilhaften Ausgestaltung erfolgt zudem die Umsetzung der rotatorischen Bewegung der elektrischen Maschine in eine translatorische Bewegung über eine exzentrische Scheibe mit einem Lenker.

### Beschreibung der Figuren

Figur 1 zeigt eine erfindungsgemäße Ausführungsform,
Figur 2 zeigt die Betätigung der Parksperre.

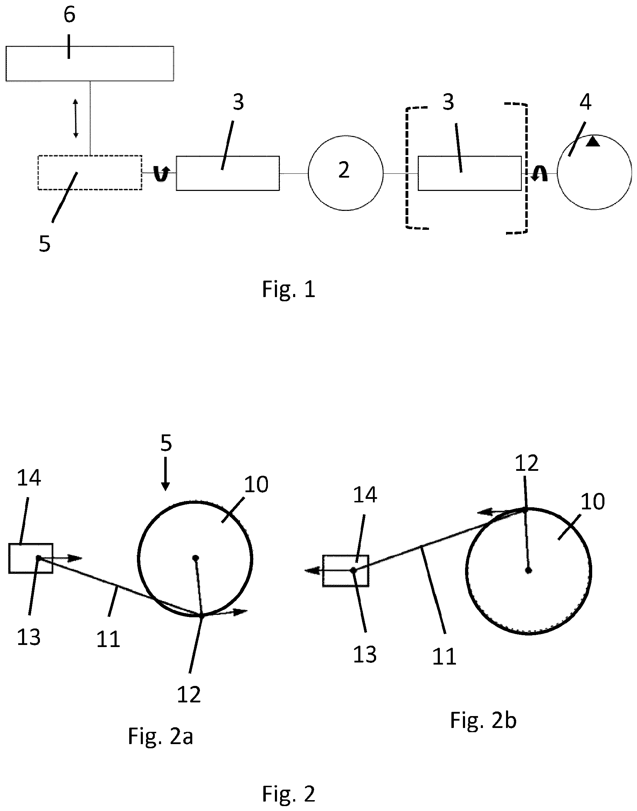

Figur 1 zeigt ein System zur Betätigung einer Parksperre 1 gemäß der vorliegenden Erfindung. Dieses System zur
Betätigung der Parksperre besitzt eine elektrische Maschine 2, die jeweils auf ihren Austrittswellen mit Freiläufen 3 versehen ist. Die elektrische Maschine 2 ist mit einer Pumpe 4 über den rechten Freilauf 3 verbunden. In einer ersten Drehrichtung, die in der Figur mit dem Pfeil angedeutet ist, betätigt die elektrische Maschine 2 die Pumpe 4, um beispielsweise einen Volumenstrom zur Kühlung und Schmierung im Getriebe bereitzustellen.

Auf der linken Seite der elektrischen Maschine ist die Austrittswelle über den zweiten Freilauf 3 mit einer Exzenter-Anordnung 5 verbunden. Die Exzenter- Anordnung 5 betreibt eine Parksperre 6.

Im normalen Betrieb der Pumpe wird die Exzenter-Anordnung 5 nicht betrieben, sie ist durch den Freilauf 3 links von der elektrischen Maschine entkoppelt.

Sobald eine Anforderung nach einer Betätigung der Parksperre vorliegt, wird die Drehrichtung der elektrischen Maschine geändert, so dass die Pumpe 4 über den Freilauf deaktiviert ist und die Exzenter-Anordnung 5 aktiviert.

Die elektrische Maschine wird somit für den hydraulischen Betrieb und für eine elektrische Aktuierung verwendet.

In einer alternativen Ausführungsform ist der rechte Freilauf 3 nicht vorhanden, was mit der gestrichelten Klammer in Figur 1 angedeutet ist. Der rechte Freilauf ist nicht notwendig um die Funktion der Aktuierung der Parksperre zu gewährleisten. Beim Einlegen der Parksperre 6 saugt die Pumpe 4 ohne den rechten Freilauf 3 kurzzeitig, anstatt zu pumpen. Dieser kurzfristige Zustand der der Pumpe 4 ist für einen Kühl- und Schmierkreislauf nicht relevant. Eine kurzfristige Unterbrechung für das Einlegen der Parksperre wirkt sich nicht kritisch auf das hydraulische System aus.

In der Figur 2 ist die Ausführung der Exzenter- Anordnung im Detail dargestellt.

Die elektrische Maschine 2 treibt eine Exzenterscheibe 10 an. An der Exzenterscheibe 10 ist ein Lenker 11 an einem Punkt 12 nahe dem äußeren Umfang der Exzenterscheibe gelenkig angebracht. Der andere Endpunkt des Lenkers 13 befindet sich auf einer Arretierung 14.

In der Figur 2a erfolgt die Bewegung des Punktes 12 durch die Drehung nach rechts, was mit dem Pfeil angedeutet ist. Die Arretierung 14 folgt der Richtung, in der sich der Punkt 12 auf der Exzenterscheibe 10 bewegt.

Die Arretierung verschiebt sich somit auch nach rechts.

Mit dem Weiterdrehen der Exzenterschreibe um 180° dreht sich die Richtung der linearen Bewegung des Endpunkts des Lenkers 13 um, wie in Fig. 2b gezeigt. Der Punkt 12 bewegt sich nach links, der Endpunkt des Lenkers 13 bewegt dabei die Arretierung 14 ebenfalls nach links.

Auf diese Weise lässt sich durch Drehung mit einer elektrischen Maschine in eine Drehrichtung ein lineares Einrücken und Ausrücken eine Arretierung realisieren.

Die gezeigte exzentrische Anordnung ist dabei exemplarisch, es kann jede weitere Anordnung gewählt werden, die eine rotatorische Bewegung in eine lineare translatorische Bewegung wandelt.

Das Konzept lässt sich sowohl für eine elektrische Pumpe für die Herstellung eines Kühlstroms verwendet, als auch für jede elektrische Maschine, die einen Aktuator direkt oder über ein hydraulisches System betreibt.

### Bezugszeichenliste

- 1: System zur Betätigung einer Parksperre
- 2: elektrische Maschine
- 3: Freilauf
- 4: Pumpe
- 5: Exzenter-Anordnung
- 6: Parksperren-Anordnung
- 10: Exzenterscheibe
- 11: Lenker
- 12: Punkt
- 13: Endpunkt des Lenkers
- 14: Arretierung

## Patentansprüche

1. System (1) zur Betätigung einer Parksperre in einem Getriebe mit einer elektrischen Maschine (2), die zwei Austrittswellen aufweist, wobei die eine Austrittswelle mit einer Pumpe (4) für ein hydraulisches System des Getriebes und die andere Austrittswelle über einen Freilauf (3) mit einer Exzenter-Anordnung (5) zum Betätigen einer Parksperre (6) verbunden ist, **dadurch gekennzeichnet, dass** die elektrische Maschine (2) in einer ersten Drehrichtung die Pumpe (4) betätigt und in dieser Drehrichtung die Exzenter-Anordnung (5) durch den Freilauf (3) von der elektrischen Maschine entkoppelt ist und nicht betrieben wird, wobei die Exzenter-Anordnung (5) ausgebildet ist, die Parksperre (6) ein- und auszulegen und dass das System so ausgebildet ist, dass bei Anforderung zu einer Betätigung der Parksperre (6) die erste Drehrichtung der elektrischen Maschine (2) geändert wird, so dass die Exzenter-Anordnung (5) über den Freilauf (3) aktiviert ist.

2. System (1) zur Betätigung einer Parksperre in einem Getriebe nach Anspruch 1, **dadurch gekennzeichnet, dass** die Exzenter-Anordnung (5) eine Exzenterscheibe (10) aufweist, wobei an der Exzenterscheibe (10) ein Lenker (11) an einem Punkt (12) nahe dem äußeren Umfang der Exzenterscheibe (10) gelenkig angebracht ist, wobei der andere Endpunkt des Lenkers (13) sich auf einer Arretierung (14) befindet, sodass das Einlegen und Auslegen der Parksperre über eine lineare Bewegung der Arretierung (14) erfolgt.

3. System (1) zur Betätigung einer Parksperre in einem Getriebe nach einem der vorhergehenden Ansprüche, **dadurch gekennzeichnet, dass** die elektrische Maschine (2) über einen weiteren Freilauf (3) mit der Pumpe (4) verbunden ist.

## Claims

1. System (1) for activating a park lock in a transmission with an electric machine (2) which has two output shafts, wherein the one output shaft is connected to a pump (4) for a hydraulic system of the transmission and the other output shaft is connected by way of a freewheel (3) to an eccentric arrangement (5) for activating a park lock (6), **characterized in that** the electric machine (2) activates the pump (4) in a first direction of rotation and in this direction of rotation the eccentric arrangement (5) is decoupled from the electric machine by the freewheel (3) and is not operated, wherein the eccentric arrangement (5) is configured to engage and disengage the park lock (6), and **in that** the system is configured in such a way that, upon request for an activation of the park lock (6), the first direction of rotation of the electric machine (2) is changed, such that the eccentric arrangement (5) is activated by way of the freewheel (3).

2. System (1) for activating a park lock in a transmission according to Claim 1, **characterized in that** the eccentric arrangement (5) has an eccentric disc (10), wherein a link (11) is attached to the eccentric disc (10) in an articulated manner at a point (12) close to the outer circumference of the eccentric disc (10), wherein the other end point (13) of the link is located on an arresting means (14), such that the park lock is engaged and disengaged by way of a linear movement of the arresting means (14).

3. System (1) for activating a park lock in a transmission according to either of the preceding claims, **characterized in that** the electric machine (2) is connected to the pump (4) by way of a further freewheel (3).

## Revendications

1. Système (1) pour l'actionnement d'un frein de stationnement dans une boîte de vitesses, comprenant une machine électrique (2) qui présente deux arbres de sortie, l'un des arbres de sortie étant relié à une pompe (4) pour un système hydraulique de la boîte de vitesses et l'autre arbre de sortie étant relié, par l'intermédiaire d'une roue libre (3), à un agencement excentrique (5) pour l'actionnement d'un frein de stationnement (6), **caractérisé en ce que** la machine électrique (2) actionne la pompe (4) dans une première direction de rotation et, dans cette direction de rotation, l'agencement excentrique (5) est découplé de la machine électrique par la roue libre (3) et ne fonctionne pas, l'agencement excentrique (5) étant configuré pour engager et désengager le frein de stationnement (6), et **en ce que** le système est configuré de telle sorte qu'en cas de demande d'actionnement du frein de stationnement (6), la première direction de rotation de la machine électrique (2) est modifiée de telle sorte que l'agencement excentrique (5) est activé par l'intermédiaire de la roue libre (3).

2. Système (1) pour l'actionnement d'un frein de stationnement dans une boîte de vitesse selon la revendication 1, **caractérisé en ce que** l'agencement excentrique (5) présente un disque excentrique (10), une bielle (11) étant montée de manière articulée sur le disque excentrique (10) en un point (12) proche de la périphérie extérieure du disque excentrique (10), l'autre point d'extrémité de la bielle (13) se trouvant sur un arrêt (14), de telle sorte que l'engagement et le désengagement du frein de stationnement se font par l'intermédiaire d'un mouvement linéaire de l'arrêt (14).

3. Système (1) pour l'actionnement d'un frein de stationnement dans une boîte de vitesses selon l'une quelconque des revendications précédentes, **caractérisé en ce que** la machine électrique (2) est reliée à la pompe (4) par l'intermédiaire d'une autre roue libre (3).
